# FASCICULE DE BREVET EUROPEEN

(11) **EP 0 703 389 B1**
(45) Date de publication et mention de la délivrance du brevet: **01.12.1999**
(21) Numéro de dépôt: 95402132.5
(22) Date de dépôt: 21.09.1995
(51) Int. Cl.: F16H 59/02, B60K 41/22, F16H 3/12, F16H 61/04

(54) **Procédé de changement de vitesses pour une boîte de vitesses mécanique d'un véhicule automobile à embrayage électrohydraulique et dispositif pour sa mise en oeuvre**
Gangwechsel-Steuerungsverfahren und Vorrichtung bei einem mechanischen Stufengetriebe für Fahrzeug mit elektrohydraulischer Kupplung
Gear shift procedure and associated device for vehicle with mechanical gear box and electro-hydraulic clutch

(30) Priorité: 26.09.1994 FR 9411454
(43) Date de publication de la demande: 27.03.1996
(73) Titulaire: AUTOMOBILES PEUGEOT, 75116 Paris (FR); AUTOMOBILES CITROEN, 92200 Neuilly-sur-Seine (FR)
(72) Inventeur: Dequenne, Michel, F-78650 Beynes (FR)
(74) Mandataire: Durand, Yves Armand Louis

(56) Documents cités:
- EP-A- 0 608 978
- WO-A-94/05522
- FR-A- 1 198 788
- FR-A- 2 646 815
- GB-A- 2 058 963
- US-A- 2 808 729

## Description

La présente invention concerne un procédé de changement de vitesses pour une boîte de vitesses mécanique d'un véhicule automobile à embrayage électro-hydraulique ou analogue et un dispositif pour sa mise en oeuvre.

Lorsqu'un véhicule est stationné dans une pente, le moteur à l'arrêt, il est usuel d'engager un rapport de boîtier de vitesses pour compenser le manque éventuel d'efficacité du frein à main ou pour pallier une défaillance accidentelle de celui-ci.

Dans les véhicules automobiles à embrayage mécanique, lorsqu'un conducteur veut faire redémarrer son véhicule, il doit préalablement débrayer en appuyant sur la pédale d'embrayage afin de ramener le levier de vitesses au point mort, faute de quoi le véhicule fera au démarrage un bon en avant ou en arrière selon qu'une marche avant ou la marche arrière est engagée et le moteur calera aussitôt.

En revanche, dans les véhicules automobiles à embrayage électro-hydraulique, électro-pneumatique ou analogue, il n'est pas possible de débrayer avant la mise en route du moteur car celui-ci alimente la pompe permettant de faire fonctionner l'embrayage.

Il n'est pas non plus possible de décraboter à force le rapport de vitesse engagé en exerçant un effort sur le levier de vitesses car les pignons primaire et secondaire de la boîte de vitesses sont en engrènement serré sous l'effet du couple résistant exercé par le poids du véhicule entraînant les roues dans le sens de la pente, ce qui provoque un blocage entre l'arbre moteur fixe en rotation à l'arrêt et l'essieu reliant les roues, au niveau du rapport de vitesse engagé.

Le document WO-A-9405522 décrit un procédé de changement de vitesses pour une boîte de vitesses mécanique d'un véhicule automobile à embrayage électro-hydraulique ou analogue, consistant à :
- établir le contact électrique dans le véhicule, si celui-ci a été préalablement interrompu ;
- exercer un effort sur le levier de vitesses pour changer un rapport de vitesse ou passer au point mort ;
- détecter la valeur de cet effort et engendrer un signal représentatif de la valeur d'effort détectée ;
- comparer la valeur d'effort détectée avec une valeur de seuil prédéterminée ;
- engendrer au moins un signal de commande lorsque la valeur d'effort détectée atteint ou dépasse cette valeur de seuil prédéterminée ; et
- actionner en réponse au signal de commande un moyen autorisant directement le décrabotage et éventuellement le crabotage du rapport de vitesse considéré, sous l'action conjuguée de l'effort précité.

Le document FR-A-2 646 815 décrit un dispositif de changement de vitesses comprenant :
- un capteur pour détecter la valeur de l'effort exercé sur le levier de vitesses par un utilisateur pour changer un rapport de vitesse ou passer au point mort, ledit capteur produisant un signal représentatif de la valeur d'effort détectée ;
- un système électronique, tel qu'un calculateur par exemple, recevant ledit signal représentatif de la valeur d'effort détectée et produisant au moins un signal de commande lorsque la valeur d'effort détectée atteint ou dépasse une valeur de seuil prédéterminée, ledit signal de commande actionnant un moyen autorisant directement le crabotage et/ou le décrabotage du rapport de vitesse considéré, sous l'action conjuguée de l'effort précité.

La présente invention a donc pour but de proposer un procédé permettant le dégagement d'une vitesse et donc d'éliminer les inconvénients précités, qui soit d'utilisation simple et rapide, qui soit facilement adaptable sur un véhicule automobile et qui permette d'automatiser la fonction et par conséquent de réaliser un embrayage automatique à commande hydraulique.

A cet effet, la présente invention a pour objet un procédé de changement de vitesses pour une boîte de vitesses mécanique d'un véhicule automobile à embrayage électro-hydraulique ou analogue, consistant à :
- établir le contact électrique dans le véhicule, si celui-ci a été préalablement interrompu ;
- exercer un effort sur le levier de vitesses pour changer un rapport de vitesse ou passer au point mort ;
- détecter la valeur de cet effort et engendrer un signal représentatif de la valeur d'effort détectée ;
- comparer la valeur d'effort détectée avec une valeur de seuil prédéterminée ;
- engendrer au moins un signal de commande lorsque la valeur d'effort détectée atteint ou dépasse cette valeur de seuil prédéterminée ; et
- actionner en réponse au signal de commande un moyen autorisant directement le décrabotage et éventuellement le crabotage du rapport de vitesse considéré, sous l'action conjuguée de l'effort précité, caractérisé en ce que, lorsque le moteur du véhicule est à l'arrêt et qu'un rapport de vitesse est engagé, il consiste à exercer, en réponse à un premier signal de commande, un couple sur l'arbre ou le volant moteur du véhicule par l'intermédiaire du moyen précité dans le sens du couple résistant engendré par le poids du véhicule au niveau du rapport de vitesse engagé.

Le procédé de l'invention peut consister en outre à détecter la position du levier d'embrayage pour déterminer si un rapport de vitesse est engagé ou non et à autoriser la production du premier signal de commande précité uniquement si un rapport de vitesse est engagé.

Selon une autre caractéristique de l'invention, le procédé peut consister à interdire l'allumage du moteur lorsqu'un rapport de vitesse est engagé et à permettre l'allumage précité lorsque le levier de vitesses est au point mort.

Selon une autre caractéristique de l'invention, on détecte un effort en flexion exercé sur la tige du levier de vitesses.

En alternative, on peut détecter et mesurer le couple exercé au niveau de l'articulation sphérique du levier de vitesses.

Avantageusement, le signal déclenchant le couple sur l'arbre ou le volant moteur a une durée de l'ordre de quelques millisecondes.

Lorsque le moteur du véhicule est en marche, on peut prévoir que le procédé de l'invention consiste alors à actionner automatiquement l'embrayage électro-hydraulique du véhicule, en réponse à un second signal de commande, et à débrayer pendant une durée suffisante pour permettre l'engagement ou le désengagement d'un rapport de vitesse sous l'action de l'effort exercé sur le levier de vitesses.

On a ainsi réalisé un embrayage automatique asservi au levier de vitesses.

Selon une autre caractéristique de l'invention, le signal déclenchant le débrayage est inférieur à la seconde.

La valeur de seuil d'effort, la valeur de couple sur l'arbre ou le volant moteur et/ou la durée de signal précitées peuvent être pré-programmées dans un système électronique embarqué sur le véhicule.

La présente invention vise également un dispositif pour la mise en oeuvre du procédé précité, ce dispositif de changement de vitesses comprenant :
- un capteur pour détecter la valeur de l'effort exercé sur le levier de vitesses par un utilisateur pour changer un rapport de vitesse ou passer au point mort, ledit capteur produisant un signal représentatif de la valeur d'effort détectée ;
- un système électronique, tel qu'un calculateur par exemple, recevant ledit signal représentatif de la valeur d'effort détectée et produisant au moins un signal de commande lorsque la valeur d'effort détectée atteint ou dépasse une valeur de seuil prédéterminée, ledit signal de commande actionnant un moyen autorisant directement le crabotage et/ou le décrabotage du rapport de vitesse considéré, sous l'action conjuguée de l'effort précité, caractérisé en ce que le système électronique est apte à produire un premier signal de commande lorsque le moteur du véhicule est à l'arrêt et qu'un rapport de vitesse est engagé, et en ce que le moyen précité est formé du démarreur qui est associé au moteur du véhicule, lequel démarreur exerce, en réponse audit premier signal de commande, un couple sur le volant moteur dans le sens du couple résistant engendré par le poids du véhicule au niveau de ce rapport de vitesse engagé, la valeur de ce couple étant déterminée de manière à annuler ou réduire suffisamment le couple résistant pour permettre le décrabotage du rapport de vitesse vers le point mort.

Selon une autre caractéristique de l'invention, le dispositif comprend un détecteur de la position du levier d'embrayage, lequel détecteur produit un signal vers le système électronique pour le renseigner sur l'engagement ou non d'un rapport de vitesse, le système électronique produisant le premier signal de commande uniquement si un rapport de vitesse est engagé.

On peut prévoir également que la commande d'allumage du moteur actionnée par l'utilisateur par l'intermédiaire de la clé de contact, n'est transmise par le système électronique au démarreur que si le signal indicatif de l'engagement d'un rapport de vitesse indique que le levier de vitesses est au point mort.

Selon un mode de réalisation particulier de l'invention, le capteur précité est un capteur à jauges de contraintes qui mesure l'effort en flexion exercé sur la tige du levier de vitesses.

Les jauges de contraintes peuvent être par exemple montées en pont de Wheatstone.

Selon un autre mode de réalisation de l'invention, le capteur est monté au niveau de l'articulation sphérique du levier et mesure le couple exercé à ce niveau.

Selon une autre caractéristique de l'invention, le système électronique produit le ou les signaux de commande pendant une durée inférieure à la seconde.

On peut prévoir également que le système électronique soit apte à produire un second signal de commande lorsque le moteur du véhicule est en marche et que le moyen autorisant le crabotage et/ou le décrabotage d'un rapport de vitesse soit formé d'une électrovanne pilotant l'embrayage précité, en réponse au second signal de commande, pour débrayer pendant une durée suffisante pour permettre l'engagement ou le désengagement d'un rapport de vitesse, sous l'action de l'effort exercé sur le levier de vitesses.

L'invention sera mieux comprise et d'autres buts, caractéristiques, détails et avantages de celle-ci apparaîtront plus clairement dans la description explicative qui va suivre d'un mode de réalisation particulier actuellement préféré de l'invention, donné uniquement à titre d'exemple illustratif et non limitatif, en référence aux dessins schématiques annexés, dans lesquels:

La figure 1 est un schéma synoptique fonctionnel d'un dispositif de changement de vitesses conforme à l'invention, associé à un train avant de véhicule automobile.

La figure 2 est une vue partielle et en élévation d'un levier de boîte de vitesses équipé d'un capteur d'effort conformément au dispositif de la figure 1.

La figure 3 est une vue partielle et de côté du levier de vitesses de la figure 2, suivant la flèche III.

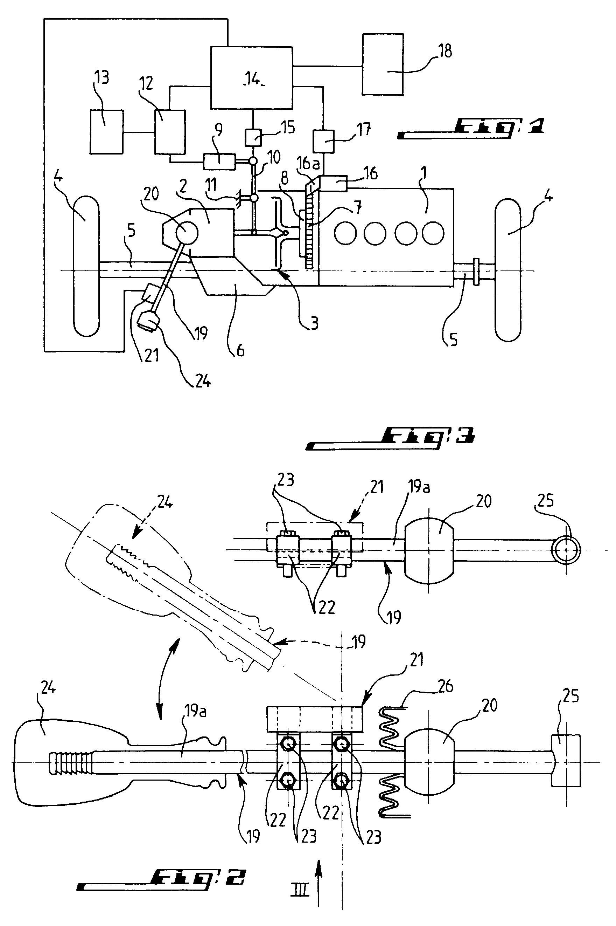

Suivant l'exemple de réalisation représenté sur la figure 1, le dispositif de l'invention est monté sur un véhicule automobile comprenant un moteur 1 relié à une boîte de vitesses mécanique 2 par un embrayage 3. On a également représenté sur la figure 1 deux roues 4, par exemple avant, qui sont reliées à la sortie de la boîte de vitesses 2 par l'intermédiaire des arbres de transmission 5 et du différentiel 6.

L'embrayage 3 qui est représenté ici est un embrayage à friction entre un plateau de volant moteur à couronne dentée 7 qui est entraîné en rotation par le moteur 1 et un plateau 8 qui est solidaire en rotation de l'arbre primaire à l'entrée de la boîte de vitesses 2, mais bien entendu on peut prévoir un autre type d'embrayage.

Le déplacement axial du plateau 8 de l'embrayage 3 est actionné par un vérin hydraulique 9 par l'intermédiaire d'un levier d'embrayage 10 qui est articulé à ses extrémités respectivement sur la tige du vérin hydraulique 9 et sur l'embrayage 3 et en son centre sur un support 11 qui sert de point de basculement pour le levier d'embrayage 10.

Le vérin hydraulique 9 est piloté par un dispositif électro-hydraulique 12 tel qu'une électrovanne qui reçoit des ordres de la part soit d'une pédale d'embrayage ou analogue 13 à commande électrique, soit d'un calculateur électronique 14.

Un détecteur 15 est prévu pour détecter le déplacement du levier d'embrayage 10 et pour renseigner le calculateur 14 si un rapport de vitesse est engagé ou non.

Le calculateur 14 commande en outre un démarreur 16 associé au moteur 1 du véhicule et dont le pignon 16a, actionné par exemple par électro-aimant, est apte à engrener avec la couronne dentée 7 du volant moteur.

Un relais de commande 17 est prévu entre le calculateur 14 et le démarreur 16 pour amplifier un courant de faible intensité reçu du calculateur 14 en un courant de forte intensité émis vers le démarreur 16.

Le calculateur 14 est mis sous tension par le contact général 18 qui commande également l'allumage du démarreur 16 via le calculateur 14.

La boîte de vitesses 2 est reliée à un levier de vitesses 19 à articulation sphérique 20, lequel levier 19 est équipé d'un capteur 21 pour mesurer la valeur de l'effort exercé par un utilisateur sur celui-ci.

On peut prévoir par exemple que le signal d'effort détecté émis par le capteur 21 soit proportionnel à la valeur de l'effort ainsi détecté.

On a représenté plus en détail ce capteur 21 sur les figures 2 et 3.

Le capteur 21 peut être constitué par un capteur à jauges de contraintes de type connu qui mesure les contraintes en flexion exercées sur la tige 19a du levier de vitesses 19.

Le capteur 21 comporte deux brides parallèles 22 qui sont montées perpendiculairement à l'axe de la tige 19a et retenues en position sur celle-ci par l'intermédiaire de deux paires de vis 23 qui viennent enserrer la tige 19a de part et d'autre de son axe.

On peut prévoir par exemple que les jauges de contraintes du capteur 21 soient montées en pont de Wheatstone.

On voit sur les figures 2 et 3 que le levier de vitesses 19 est constitué d'une tige 19a qui vient se visser dans un pommeau 24 à son extrémité libre supérieure et qui comporte à son extrémité opposée un palier tubulaire 25 destiné à recevoir une tringle de commande de rapport de vitesse.

La tige 19a peut basculer autour de l'articulation sphérique 20 prévue entre son extrémité libre supérieure et son extrémité opposée.

On a partiellement représenté sur la figure 2 un capuchon de protection 26 qui entoure l'articulation sphérique 20 du levier de vitesses 19.

On va maintenant expliquer le fonctionnement du dispositif de l'invention en référence aux figures.

Lorsque le moteur du véhicule est à l'arrêt et qu'un rapport de vitesse est resté engagé, par exemple pour pallier une éventuelle défaillance du frein à main du véhicule lorsque celui-ci est stationné dans une pente, le conducteur du véhicule doit passer le levier de vitesses 19 au point mort avant de mettre le moteur 1 en marche, sous peine de voir le véhicule faire un bon en avant ou en arrière au démarrage et caler de ce fait.

Le conducteur doit d'abord mettre le contact 18 pour alimenter en énergie les différents circuits électroniques du véhicule à l'aide de la batterie du véhicule (non représentée). Le capteur d'effort 21 et le calculateur 14 ne fonctionnent que si le contact électrique est établi.

Si par erreur, le conducteur sollicite sa clé de contact vers la position d'allumage du moteur 1, on peut prévoir au niveau du calculateur 14 une sécurité qui consiste à transmettre la commande d'allumage au démarreur 16 uniquement lorsque le calculateur 14 reçoit l'information selon laquelle le levier de vitesses est au point mort.

Si le véhicule est équipé d'une pédale d'embrayage 13 à commande électro-hydraulique, l'utilisateur ne peut débrayer le rapport de vitesse engagé car le circuit hydraulique ne fonctionne que lorsque le moteur est en marche.

D'autre part, le conducteur ne peut dégager le levier de vitesses à force du fait du couple résistant entre les pignons de la boîte de vitesses, engendré par le poids du véhicule entraînant les roues 4.

Selon l'invention, lorsque l'utilisateur exerce un effort sur le levier de vitesses 19, celui-ci se courbe et déplace les brides 22, ce qui permet au capteur 21 de mesurer la valeur d'effort en flexion sur la tige 19a du levier de vitesses 19.

La valeur de cet effort est transmise par un signal au calculateur 14 qui traite ce signal en fonction d'autres signaux d'entrée et de données pré-programmées.

Bien entendu, le calculateur 14 peut se présenter sous la forme de microprocesseurs intégrés ou comporter un logiciel programmable.

Le calculateur 14 reçoit également en entrée un signal de la part du détecteur 15 l'informant sur l'engagement ou non d'un rapport de vitesse et un signal indiquant l'engagement ou non de la marche arrière.

Lorsque la valeur d'effort transmise par le capteur 21 atteint ou dépasse une valeur de seuil prédéterminée et pré-programmée, le calculateur 14 produit un premier signal de commande pour déclencher l'actionnement du démarreur 16.

Le pignon du démarreur 16 est sollicité pendant une durée très brève, par exemple de l'ordre de quelques millisecondes, et exerce un couple sur la couronne dentée du volant moteur 7 pour annuler le couple résistant au niveau des pignons de boîte de vitesses.

Le levier de vitesses 19 étant toujours sollicité en flexion par le conducteur vers le point mort, dès que le couple résistant au niveau de la boîte de vitesses 2 est annulé, le levier 19 bascule vers le point mort, comme indiqué en trait mixte sur la figure 2.

Le dispositif de l'invention peut également servir à automatiser l'embrayage du véhicule, en supprimant la pédale d'embrayage 13.

Lorsque le moteur 1 du véhicule est en route, et que l'utilisateur souhaite changer un rapport de vitesse à partir d'un autre rapport de vitesse ou du point mort, l'utilisateur exerce de la même manière que précédemment un effort en flexion sur le levier de vitesses 19 qui transmet un signal représentatif de cet effort au calculateur 14 qui actionne à son tour, lorsque la valeur de cet effort dépasse une valeur de seuil prédéterminée, l'électrovanne 12 pilotant le vérin hydraulique 9 qui réalise le débrayage et l'embrayage souhaités.

L'invention réalise ainsi un dispositif de changement de vitesses permettant de décraboter un rapport de vitesse engagé lorsque le moteur du véhicule est à l'arrêt et/ou d'automatiser un système d'embrayage à commande électro-hydraulique.

Bien que la présente invention ait été décrite en liaison avec un mode de réalisation particulier, il est évident qu'elle n'y est nullement limitée et qu'on peut lui apporter de nombreuses variantes et modifications sans pour autant sortir de son cadre tel que défini dans les revendications qui suivent.

## Revendications

1. Procédé de changement de vitesses pour une boîte de vitesses mécanique (2) d'un véhicule automobile à embrayage (3) électro-hydraulique ou analogue, consistant à :
- établir le contact électrique (18) dans le véhicule, si celui-ci a été préalablement interrompu ;
- exercer un effort sur le levier de vitesses (19) pour changer un rapport de vitesse ou passer au point mort ;
- détecter la valeur de cet effort et engendrer un signal représentatif de la valeur d'effort détectée ;
- comparer la valeur d'effort détectée avec une valeur de seuil prédéterminée ;
- engendrer au moins un signal de commande lorsque la valeur d'effort détectée atteint ou dépasse cette valeur de seuil prédéterminée ; et
- actionner en réponse au signal de commande un moyen (16, 12) autorisant directement le décrabotage et éventuellement le crabotage du rapport de vitesse considéré, sous l'action conjuguée de l'effort précité,
caractérisé en ce qu'il consiste, lorsque le moteur (1) du véhicule est à l'arrêt et qu'un rapport de vitesse est engagé, à exercer, en réponse à un premier signal de commande, un couple sur l'arbre ou le volant moteur (7) du véhicule par l'intermédiaire du moyen (16) précité dans le sens du couple résistant engendré par le poids du véhicule au niveau du rapport de vitesse engagé.

2. Procédé selon la revendication 1, caractérisé en ce qu'il consiste à détecter la position du levier d'embrayage (10) pour déterminer si un rapport de vitesse est engagé ou non et à autoriser la production du premier signal de commande précité uniquement si un rapport de vitesse est engagé.

3. Procédé selon la revendication 2, caractérisé en ce qu'il consiste à interdire l'allumage du moteur (1) lorsqu'un rapport de vitesse est engagé et à permettre l'allumage précité lorsque le levier de vitesse (19) est au point mort.

4. Procédé selon la revendication 1, caractérisé en ce qu'il consiste, lorsque le moteur du véhicule est en marche, à actionner automatiquement l'embrayage électro-hydraulique (3) du véhicule, en réponse à un second signal de commande, et à débrayer pendant une durée suffisante pour permettre l'engagement et le désengagement d'un rapport de vitesse sous l'action de l'effort exercé sur le levier de vitesse (19).

5. Procédé selon l'une quelconque des revendications précédentes, caractérisé en ce qu'il consiste à actionner le moyen précité pendant une durée inférieure à la seconde.

6. Procédé selon l'une quelconque des revendications précédentes, caractérisé en ce qu'il consiste à détecter un effort en flexion exercé sur la tige (19a) du levier de vitesse (19).

7. Procédé selon l'une quelconque des revendications 1 à 5, caractérisé en ce qu'il consiste à détecter et à mesurer le couple exercé au niveau de l'articulation sphérique (20) du levier de vitesse (19).

8. Procédé selon l'une quelconque des revendications précédentes, caractérisé en ce que le signal déclenchant le couple sur l'arbre ou le volant moteur a une durée de l'ordre de quelques millisecondes.

9. Dispositif de changement de vitesse pour la mise en oeuvre du procédé conforme à l'une quelconque des revendications précédentes, comprenant :
- un capteur (21) pour détecter la valeur de l'effort exercé sur le levier de vitesse (19) par un utilisateur pour changer un rapport de vitesse ou passer au point mort, ledit capteur (21) produisant un signal représentatif de la valeur d'effort détectée ;
- un système électronique (14) recevant ledit signal représentatif de la valeur d'effort détectée et produisant au moins un signal de commande lorsque la valeur d'effort détectée atteint ou dépasse une valeur de seuil prédéterminée, ledit signal de commande actionnant un moyen (12, 16) autorisant directement le crabotage et/ou le décrabotage du rapport de vitesse considéré, sous l'action conjuguée de l'effort précité,
caractérisé en ce que le système électronique (14) est apte à produire un premier signal de commande lorsque le moteur (1) du véhicule est à l'arrêt et qu'un rapport de vitesse est engagé, et en ce que le moyen précité est formé du démarreur (16) qui est associé au moteur du véhicule, lequel démarreur exerce, en réponse audit premier signal de commande, un couple sur le volant moteur (7) dans le sens du couple résistant engendré par le poids du véhicule au niveau de ce rapport de vitesse engagé, la valeur de ce couple étant déterminée de manière à annuler ou réduire suffisamment le couple résistant pour permettre le décrabotage du rapport de vitesse vers le point mort.

10. Dispositif selon la revendication 9, caractérisé en ce qu'il comprend un détecteur (15) de la position du levier d'embrayage (10), lequel détecteur (15) produit un signal vers le système électronique (14) pour le renseigner sur l'engagement ou non d'un rapport de vitesse, le système électronique (14) produisant le premier signal de commande uniquement si un rapport de vitesse est engagé.

11. Dispositif selon la revendication 10, caractérisé en ce que la commande d'allumage (18) du moteur (1) actionnée par l'utilisateur par l'intermédiaire de la clé de contact, n'est transmise par le système électronique (14) au démarreur (16) que si le signal indicatif de l'engagement d'un rapport de vitesse indique que le levier de vitesse (19) est au point mort.

12. Dispositif selon la revendication 9, caractérisé en ce que le système électronique (14) est apte à produire un second signal de commande lorsque le moteur (1) du véhicule est en marche et en ce que le moyen autorisant le crabotage et/ou le décrabotage d'un rapport de vitesse est formé d'une électrovanne (12) pilotant l'embrayage électro-hydraulique (3) précité, en réponse au second signal de commande, pour débrayer pendant une durée suffisante pour permettre l'engagement ou le désengagement d'un rapport de vitesse, sous l'action de l'effort exercé sur le levier de vitesse (19).

13. Dispositif selon l'une quelconque des revendications 9 à 12, caractérisé en ce que le capteur (21) précité est un capteur à jauges de contraintes qui mesure l'effort en flexion exercé sur la tige (19a) du levier de vitesse (19).

14. Dispositif selon la revendication 13, caractérisé en ce que les jauges de contraintes sont montées en pont de Wheatstone.

15. Dispositif selon l'une des revendications 9 à 12, caractérisé en ce que le capteur est monté au niveau de l'articulation sphérique du levier et mesure le couple exercé à ce niveau.

16. Dispositif selon l'une quelconque des revendications 9 à 15, caractérisé en ce que le système électronique (14) produit le ou les signaux de commande pendant une durée inférieure à la seconde.

## Patentansprüche

1. Verfahren für den Gangwechsel an einem mechanischen Schaltgetriebe (2) eines Kraftfahrzeugs mit elektrohydraulischer oder vergleichbarer Kupplung (3) in folgenden Schritten:
- Schließen des elektrischen Kontakts (18) in dem Fahrzeug, wenn dieser zuvor unterbrochen gewesen ist;
- Ausüben einer Kraft auf den Schalthebel (19), um einen Gang zu wechseln oder in den Leerlauf zu schalten;
- die Größe dieser Kraft feststellen und ein Signal erzeugen, das für die Größe der festgestellten Kraft charakteristisch ist;
- die Größe der festgestellten Kraft mit einem vorbestimmten Schwellenwert vergleichen;
- mindestens ein Steuersignal erzeugen, wenn die Größe der festgestellten Kraft diesen vorbestimmten Schwellenwert erreicht oder überschreitet; und
- als Reaktion auf das Steuersignal eine Einrichtung (16, 12) betätigen, die unmittelbar die Trennung und unter Umständen das Eingreifen des betrachteten Getriebeganges ermöglicht unter der gemeinsamen Wirkung der erwähnten Kraft,
dadurch gekennzeichnet, daß das Verfahren darin besteht, daß, wenn der Fahrzeugsmotor (1) stillsteht und wenn ein Getriebegang eingelegt ist, als Reaktion auf ein erstes Steuersignal ein Drehmoment auf die Welle oder das Schwungrad (7) des Fahrzeugs mit Hilfe der erwähnten Einrichtung (16) in Richtung des Widerstandsmoments ausgeübt wird, das hervorgerufen ist durch das Fahrzeuggewicht im Rahmen des eingelegten Getriebeganges.

2. Verfahren nach Anspruch 1, dadurch gekennzeichnet, daß es darin besteht, die Stellung des Kupplungshebels (10) festzustellen, um zu bestimmen, ob ein Getriebegang eingelegt ist oder nicht und die Abgabe des genannten ersten Steuersignals nur dann zu erlauben, wenn ein Getriebegang eingelegt ist.

3. Verfahren nach Anspruch 2, dadurch gekennzeichnet, daß es darin besteht, die Zündung des Motors (1) zu sperren, wenn ein Getriebegang eingelegt ist, und die erwähnte Zündung zu ermöglichen, wenn der Schalthebel (19) in Leerlaufstellung steht.

4. Verfahren nach Anspruch 1, dadurch gekennzeichnet, daß es darin besteht, bei laufendem Fahrzeugmotor als Reaktion auf ein zweites Steuersignal automatisch die elektrohydraulische Kupplung (3) des Fahrzeugs zu betätigen und während einer ausreichend langen Zeitspanne auszukuppeln, um das Einlegen und Ausrücken eines Ganges unter der Wirkung der Kraft zu ermöglichen, die auf den Schalthebel (19) ausgeübt wird.

5. Verfahren nach einem der vorhergehenden Ansprüche, dadurch gekennzeichnet, daß es darin besteht, die genannte Einrichtung während einer Zeitspanne von weniger als einer Sekunde zu betätigen.

6. Verfahren nach einem der vorhergehenden Ansprüche, dadurch gekennzeichnet, daß es darin besteht, eine auf den Schaft (19a) des Gangschalthebels (19) ausgeübte Biegekraft zu ermitteln.

7. Verfahren nach einem der Ansprüche 1 bis 5, dadurch gekennzeichnet, daß es darin besteht, das Moment zu ermitteln und zu messen, das im Bereich des Kugelgelenks (20) des Gangschalthebels (19) ausgeübt wird.

8. Verfahren nach einem der vorhergehenden Ansprüche, dadurch gekennzeichnet, daß das Signal, das das Moment auf die Antriebswelle oder das Schwungrad auslöst, eine Dauer von größenordnungsmäßig einigen Millisekunden hat.

9. Gangwechselvorrichtung zur Ausübung des Verfahrens nach einem der vorhergehenden Ansprüche, bestehend aus:
- einem Meßfühler (21) zur Ermittlung der Größe der von einem Benutzer auf den Schalthebel (19) ausgeübten Kraft zum Wechseln eines Getriebeganges oder zum Übergang in die Leerlaufstellung, welcher Meßfühler (21) ein für die Größe der ermittelten Kraft kennzeichnendes Signal aussendet;
- einem elektronischen System (14), das das für die Größe der ermittelten Kraft kennzeichnende Signal aufnimmt und mindestens ein Steuersignal aussendet, wenn die ermittelte Größe der Kraft einen vorbestimmten Schwellenwert erreicht oder überschreitet, welches Steuersignal eine Einrichtung (12, 16) betätigt, die unmittelbar das Eingreifen und/oder Trennen des betrachteten Getriebeganges zuläßt unter der zugeordneten Wirkung der vorgenannten Kraft,
dadurch gekennzeichnet, daß das elektronische System (14) in der Lage ist, ein erstes Steuersignal zu erzeugen, wenn der Motor (1) des Fahrzeugs stillsteht und ein Getriebegang eingelegt ist, und daß die vorgenannte Einrichtung besteht aus dem zu dem Fahrzeugmotor gehörigen Anlasser (16), welcher Anlasser in Reaktion auf das genannte erste Steuersignal ein Drehmoment auf das Schwungrad (7) des Motors in Richtung des Widerstandsmoments ausübt, das erzeugt wird durch das Fahrzeuggewicht nach Maßgabe des eingelegten Getriebeganges, wobei die Größe dieses Moments so festgelegt wird, daß das Widerstandsmoment aufgehoben oder soweit herabgesetzt wird, daß das Lösen des Getriebeganges zum Leerlauf hin möglich ist.

10. Vorrichtung nach Anspruch 9, dadurch gekennzeichnet, daß sie einen Detektor (15) für die Stellung des Kupplungshebels (10) besitzt, welcher Detektor (15) ein Signal auf das elektronische System (14) überträgt, um ihm anzuzeigen, ob ein Getriebegang eingelegt ist oder nicht, wobei das elektronische System (14) das erste Steuersignal nur dann abgibt, wenn ein Getriebegang eingelegt ist.

11. Vorrichtung nach Anspruch 10, dadurch gekennzeichent, daß das Einschalten der Zündung (18) des Motors (1), das durch den Benutzer mit Hilfe des Zündschlüssels vorgenommen wird, von dem elektronischen System (14) nur dann auf den Anlasser (16) übertragen wird, wenn das Signal, welches erkennen läßt, daß ein Getriebegang eingelegt ist, anzeigt, daß der Schalthebel (19) in Leerlaufstellung steht.

12. Vorrichtung nach Anspruch 9, dadurch gekennzeichnet, daß das elektronische System (14) ein zweites Steuersignal zu erzeugen vermag, wenn der Fahrzeugmotor (1) läuft, und dadurch, daß die Einrichtung, die das Eingreifen und/oder das Trennen eines Getriebeganges ermöglicht, aus einem Magnetventil (12) besteht, das die genannte elektrohydraulische Kupplung (3) in Reaktion auf das zweite Steuersignal steuert, um während einer so ausreichend langen Zeitspanne auszukuppeln, daß das Einlegen oder Herausnehmen eines Getriebeganges unter der Wirkung der auf den Schalthebel (19) ausgeübten Kraft möglich ist.

13. Vorrichtung nach einem der Ansprüche 9 bis 12, dadurch gekennzeichnet, daß der genannte Meßfühler (21) ein Dehnungsmeßfühler ist, der die an dem Schaft (19a) des Schalthebels (19) ausgeübte Biegebeanspruchung mißt.

14. Vorrichtung nach Anspruch 13, dadurch gekennzeichnet, daß die Dehnungsmeßstreifen als Wheatstonebrücke geschaltet sind.

15. Vorrichtung nach einem der Ansprüche 9 bis 12, dadurch gekennzeichnet, daß der Meßfühler im Bereich des Kugelgelenks des Schalthebels angebracht ist und das in diesem Bereich auftretende Moment mißt.

16. Vorrichtung nach einem der Ansprüche 9 bis 15, dadurch gekennzeichnet, daß das elektronische System (14) das Steuersignal oder die Steuersignale während einer Zeitspanne von weniger als einer Sekunde erzeugt.

## Claims

1. Gear shift method for a mechanical gear change box (2) on a motor vehicle with an electrohydraulic or similar clutch (3), consisting in:
- establishing electrical contact (18) in the vehicle, if this has previously been interrupted;
- exerting an effort on the gear lever (19) in order to change a gear ratio or select the neutral position;
- detecting the level of said effort and generating a signal representative of the detected level of effort;
- comparing the detected level of effort with a preset threshold level;
- generating at least one control signal when the detected level of effort reaches or exceeds said preset threshold level; and
- actuating, in response to the control signal, a means (16, 12) which directly permits the disengagement of the clutch and possibly the selection of the gear ratio concerned, under the combined action of the aforesaid effort,
characterised in that it consists, when the engine (1) of the vehicle is stopped and a gear ratio has been selected, in applying, in response to a first control signal, a torque to the engine shaft or flywheel (7) of the vehicle by the agency of the aforesaid means (16) in the direction of the strong torque generated by the weight of the vehicle on the gear ratio selected.

2. Method according to claim 1, characterised in that it consists in detecting the position of the clutch lever (10) in order to determine whether or not a gear ratio has been selected, and in permitting the first aforesaid control signal to be produced only if a gear ratio has been selected.

3. Method according to claim 2, characterised in that it consists in prohibiting the engine (1) from firing when a gear ratio has been selected and in permitting said firing to take place when the gear lever (19) is in the neutral position.

4. Method according to claim 1, characterised in that it consists, when the engine of the vehicle is running, in automatically actuating the electro-hydraulic clutch (3) of the vehicle, in response to a second control signal, and in disengaging the clutch for a sufficient duration to permit a gear ratio to be selected and deselected under the action of the load applied to the gear lever (19).

5. Method according to any of the preceding claims, characterised in that it consists in actuating the aforesaid means for a duration of less than one second.

6. Method according to any of the preceding claims, characterised in that it consists in detecting a bending stress exerted on the rod (19a) of the gear lever (19).

7. Method according to any of claims 1 to 5, characterised in that it consists in detecting and measuring the torque exerted on the spherical drive joint (20) of the gear lever (19).

8. Method according to any of the preceding claims, characterised in that the signal that activates the torque on the engine shaft or flywheel has a duration in the order of a few milliseconds.

9. Gear shift device for implementing the method according to any of the preceding claims, comprising:
- a sensor (21) for detecting the level of the effort exerted on the gear lever (19) by a user in order to change a gear ratio or select the neutral position, said sensor (21) producing a signal representative of the detected level of effort;
- an electronic system (14) which receives said signal representative of the detected level of effort and which produces at least one control signal when the detected level of effort reaches or exceeds a preset threshold level, said control signal actuating a means (12, 16) which directly permits the selection and/or deselection of the gear ratio concerned, under the combined action of the aforesaid effort,
characterised in that the electronic system (14) is adapted to produce a first control signal whenever the engine (1) of the vehicle is stopped and a gear ratio has been selected, and in that the aforesaid means is constituted by the starter (16) which is associated with the engine of the vehicle, said starter exerting, in response to said first control signal, a torque on the flywheel (7) of the engine in the direction of the strong torque generated by the weight of the vehicle on said selected gear ratio, the level of said torque being determined so as to cancel out or sufficiently reduce the strong torque in order to enable the gear ratio to be deselected in favour of the neutral position.

10. Device according to claim 9, characterised in that it comprises a clutch lever (10) position detector (15), said detector (15) producing a signal to the electronic system (14) to tell it about the selection or otherwise of a gear ratio, and the electronic system (14) producing the first control signal only if a gear ratio has been selected.

11. Device according to claim 10, characterised in that the ignition control (18) of the engine (1), actuated by the user via the ignition key, is only transmitted by the electronic system (14) to the starter (16) if the signal indicating the selection of a gear ratio indicates that the gear lever (19) is in the neutral position.

12. Device according to claim 9, characterised in that the electronic system (14) is adapted to produce a second control signal when the engine (1) of the vehicle is running and that the means permitting the selection and/or deselection of a gear ratio is formed by a solenoid valve (12) which monitors the aforesaid electro-hydraulic clutch (3), in response to the second control signal, in order to disengage the clutch for a duration sufficient to enable a gear ratio to be selected or deselected, under the action of the effort exerted on the gear lever (19).

13. Device according to any of claims 9 to 12, characterised in that the aforesaid sensor (21) is a strain gauge sensor which measures the bending stress exerted on the rod (19a) of the gear lever (19).

14. Device according to claim 13, characterised in that the strain gauges are mounted in a Wheatstone bridge.

15. Device according to any of claims 9 to 12, characterised in that the sensor is mounted on the spherical drive joint of the lever and measures the torque exerted thereon.

16. Device according to any of claims 9 to 15, characterised in that the electronic system (14) produces the control signal or signals for a duration of less than one second.
